# EUROPÄISCHE PATENTSCHRIFT

(11) **EP 1 794 053 B1**
(45) Veröffentlichungstag und Bekanntmachung des Hinweises auf die Patenterteilung: **17.06.2009**
(21) Anmeldenummer: 05857624.0
(22) Anmeldetag: 28.09.2005
(51) Int. Cl.: B64D 11/06, B60N 2/015, F16B 7/18

(54) **VORRICHTUNG ZUM FESTLEGEN EINES GEGENSTANDES AN EINER SCHIENE**
DEVICE FOR FIXING AN OBJECT TO A RAIL
DISPOSITIF DE FIXATION D'UN OBJET SUR UN RAIL

(30) Priorität: 28.09.2004 DE 202004015211 U; 11.03.2005 DE 202005004134 U
(43) Veröffentlichungstag der Anmeldung: 13.06.2007
(73) Patentinhaber: allsafe Jungfalk GmbH & Co. KG, 78234 Engen (DE)
(72) Erfinder: STUBBE, Ingolf, 78244 Gottmadingen (DE)
(74) Vertreter: Weiss, Peter
(86) Internationale Anmeldenummer: PCT/EP2005/010483
(87) Internationale Veröffentlichungsnummer: WO 2006/034855

(56) Entgegenhaltungen:
- US-A- 4 396 175
- US-A- 4 493 470
- US-A- 4 796 837
- US-A- 5 871 318

## Beschreibung

Die Erfindung betrifft eine Vorrichtung zum Festlegen eines Gegenstandes an einer Schiene mittels eines Fittings, der mit -einem Gleitkörper entlang der Schiene in einer Nut bewegbar ist und einen Retainer aufweist, der in zumindest eine seitliche Nutmulde in der Schiene absenkbar ist, wobei der Retainer über ein drehbares Verbindungselement mit dem Gleitkörper verbunden ist und sich gegenüber dem Gleitkörper und/oder gegenüber einem Drehelement über zumindest einen Kraftspeicher abstützt und den unter Druck stehenden Retainer in zumindest zwei Höhenlagen gegenüber der Schiene festhält (siehe z.B. US-A-4 493 470).

### Stand der Technik

Die erfindungsgemässe Vorrichtung dient vor allem dem Festlegen von Flugzeugsitzen an entsprechenden Schienen in einem Flugzeug, sie soll jedoch nicht darauf beschränkt sein, wenn sie nachfolgend anhand dieses Beispiels beschrieben wird.

Es ist bekannt, dass Flugzeugsitze sehr oft je nach Belegung des Flugzeuges entlang von Schienen verschoben werden müssen, was möglichst schnell geschehen soll. Die anschliessende Festlegung an einer gewünschten Position muss wiederum sehr zuverlässig erfolgen, da die Sitze eine bestimmte vorgeschriebene Beschleunlgungs- und Verzögerungsgeschwindigkeit einhalten müssen.

Die meisten derartigen Flugzeuge sind heute mit sog. Airline - Schienen ausgerüstet, die allgemein bekannt sind. Zur näheren Veranschaulichung einer Airline - Schiene wird auf die DE 202 18 780 U1 verwiesen. Die Airline - Schiene besitzt eine hinterschnittene Nut zur Aufnahme eines Gleitkörpers, wobei in die freien Nutränder beidseits korrespondierende Mulden eingeformt sind.

Zum Festlegen von Sitzen an derartigen Airline - Schienen sind Fittinge bekannt, die den o.g. Gleitkörper besitzen, der mit seitlichen Gleitschuhen in der hinterschnittenen Nut gleitet und in dieser Nut verschoben werden kann. Um diesen Gleitkörper, der auch ein Verbindungselement aufweist, an einer bestimmten Stelle der Airline - Schiene festzulegen, sitzt auf dem Gleitkörper ein Retainer auf. Dieser Retainer besitzt seitlich angeformte Hügel zwischen jeweils zwei Gleitschuhen. Wird der Retainer abgesenkt, so fahren diese Hügel in die oben erwähnten Randmulden der Airline - Schiene ein, so dass nunmehr ein weiteres Verschieben des Fittings nicht mehr möglich ist.

Zum Absenken und Festlegen des Retainers dient eine Schraube, deren Kopf auf den Retainer drückt und dadurch den Retainer nach unten absenkt. Der Nachteil dabei ist, dass ein sehr langer Schraubweg zurückgelegt werden muss, und zwar sowohl beim Absenken als auch beim Anheben des Retainers. Dies erfordert ausserordentlich viel Zeit, ist mühsam und bewirkt oftmals, dass die Fittinge nicht ordnungsgemäss an der Airline - Schiene festgelegt werden, so dass es zu einem Klappern, ja sogar zu einem Lösen des Fittings kommen kann. Dies ist äusserst unerwünscht.

Eine derartige Vorrichtung, bei welcher zum Absenken und Festlegen eine Retainers eine Schraube dient, wird in der US 4,796,837 beschrieben.

Aus der o.f. US 4,493,470 ist eine weitere Vorrichtung zum Festlegen eines Gegenstandes an eine-Schiene mittels eines Fittings offenbart, der mit einem Gleitkörper entlang der Schienen einer Nut bewegbar ist und einen Retainer aufweist, der in zumindest eine seitliche Nutmulde in der Schiene absenkbar ist. Dabei ist der Retainer über ein zylindrisches Verbindungselement mit dem Gleitkörper verbunden und stützt sich gegenüber dem Gleitkörper und/oder gegenüber einem Handlingelement über eine Druckfeder ab. Zum Verschieben bzw. Festlegen der Vorrichtung muss lediglich das Handlingelement betätigt werden.

Nachteilig bei dieser Vorrichtung ist, dass auch hier ein Klappern bzw. ein Lösen des Fittings nicht vollkommen ausgeschlossen ist.

Eine weitere Vorrichtung zum Festlegen eines Gegenstandes an einer Schiene mittels eines Fittings wird in der US 5,871,318 beschrieben. Hierbei dient zum Absenken und Festlegen eines Retainers ein Verriegelungspin, welcher durch Drehen den Retainer in zumindest zwei Höhenlagen gegenüber der Schiene festhält.

Nachteilig bei dieser Vorrichtung ist, dass sie einen komplizierten und viele Bestandteile aufweisenden Aufbau aufweist. Darüber hinaus ist ein ordnungsgemässes und sicheres Festlegen der Vorrichtung an der Schiene nicht gewährleistet.

### Aufgabe

Aufgabe der vorliegenden Erfindung ist es, eine Vorrichtung der o.g. Art zu schaffen, bei der die Fittinge schnell gelöst und schnell wieder an einer anderen gewünschten Stelle festgelegt werden könnten. Gleichzeitig soll ein Klappern der Vorrichtung vermindert werden und ein sicheres Festlegen der Fittinge gewährleistet werden.

### Lösung der Aufgabe

Zur Lösung der Aufgabe führt, dass dem Drehelement auf dem Retainer ein Anschlag und/oder zumindest eine Rastkerbe oder Rastmulde zugeordnet ist.

Durch die Vorsehung eines Anschlages und/oder zumindest einer Rastkerbe oder Rastmulde wird gewährleistet, dass der Retainer sicher und geräuschfrei festgelegt werden kann.

In einem einfachen Ausführungsbeispiel der Erfindung ist das Drehelement ein Querriegel, welcher von dem Verbindungselement, insbesondere dem Kantkopf des Verbindungselementes abragt. Der Querriegel greift in Verschiebelage des Fittings in eine Mulde in dem Retainer ein. Dabei ist gleichzeitig der Kantkopf in dem Retainer versenkt.

Die Mulde bildet bevorzugt eine Steigfläche zum Aufgleiten des Querriegels aus, wobei die Steigfläche zu der Rastmulde hinführt, die etwa um 90° gedreht zu der Mulde verläuft.

Das Verbindungselement soll bevorzugt deshalb einen Kantkopf aufweisen, damit es von einem entsprechenden Werkzeugschlüssel angreifbar ist

Wird bei diesem Ausführungsbeispiel der Retainer mit der Hand nach unten gedrückt, ragt der Kantkopf aus dem Retainer heraus. An dem Kantkopf wird eine Schlüssel angesetzk, mit dem der Kantkopf um 90° gedreht wird. Nun greift der Querriegel in die Rastmulde ein, und der Retainer kann nicht mehr aus seiner Rastlage mit der Airline - Schiene gelangen.

In einem verbesserten Ausführungsbeispiel der Erfindung ist das Drehelement ein Drehplättchen, welches an dem Verbindungselement angeordnet ist. Dieses Drehplättchen ist so ausgestaltet, dass es in Verschiebelage des Fittings in dem Retainer aufgenommen ist. Wird der Retainer jedoch zum Festlegen des Fittings mit der Hand gegen die Kraft eines Kraftspeichers oder von dem Kraftspeicher nach unten gedrückt, ragt das Drehplättchen aus dem Retainer heraus und kann nunmehr um 90° gedreht werden, bis es gegen den Anschlag anschlägt und nicht weiter gedreht werden kann. Dabei übergreift das Drehplättchen den Retainer und fährt in die Rastkerben ein, so dass der Retainer nicht mehr in die Verschiebelage zurückkehren kann.

Als Kraftspeicher bietet sich eine Schraubenfeder an, allerdings könnte auch eine Blattfeder od. dgl. Anwendung finden. Im Falle der Wahl einer Schraubenfeder ist es am besten, wenn diese das Verbindungselement umfängt, da sie hierdurch gleichzeitig eine innere Abstützung erfahrt.

Wird nunmehr das Verbindungselement, beispielsweise ein Schraubenbolzen, der den Retainer durchsetzt und mit einem Gewindeabschnitt in eine Gewindebohrung in den Gleitkörper eingreift, nach unten gedreht, drückt das Drehplättchen den Retainer ebenfalls nach unten, gleichzeitig wird der Gleitkörper angezogen, so dass der Fitting durch ein Einklammern der Randstreifen der Airline - Schienen zwischen den Gleitschuhen und einer Unterkante des Retainers festgelegt wird. Hierdurch werden Klappergeräusche vermieden.

Wie oben erwähnt, kann der Retainer einmal gegen die Kraft einer Feder oder aber von einer Feder nach unten gedrückt werden. In dem ersten Fall wird der Fitting an eine gewünschte Stelle verschoben und sodann der Retainer gegen die Kraft der Feder nach unten gedrückt, so dass entsprechende Retainer-Hügel in Mulden der Airline-Schiene einfahren können, In diesem Fall sind zwei Hände notwendig, da der Retainer nach unten gedrückt und das Drehplättchen über Seitenstreifen des Retainers gedreht werden muss.

In dem anderen Ausfahrungsbeispiel ist nur eine Hand notwendig, da der Retainer durch eine entsprechende Ausgestaltung des Drehplättchens in Offenlage gehalten wird und entlang der Airline-Schiene verfahren werden kann. Hierzu sind an dem Drehplättchen entsprechende Rastnasen bzw. Anschlagnasen vorgesehen, die in den Rastmulden In den Seitenstreifen des Retainers sitzen und diesen in Offenlage halten.

ist dann die gewünschte Position erreicht, braucht das Drehplättchen nur um etwa 90° gedreht zu Werden, wobei die Rastnasen bzw. Anschlagnasen aus den Rastmulden gleiten und den Retainer freigeben. Der Retainer fährt unter dem Druck der Schraubenfeder nach unten und sitzt auf der Airline-Schiene auf. Der Fitting kann dann geringfügig verschoben werden, so dass der Retainer unter dem Druck der Schraubenfeder mit seinen Hügeln in die Airline-Mulden einfährt.

Das Drehen das Drehplättchens kann zum einen dadurch unterstützt werden, dass das Drehplättchen sich auf einer Hülse abstützt, die verhindert, dass das Drehplättchen entlang dem Schaft des Verbindungselementes nach unten wandert. In diesem Ausführungsbeispiel wird bevorzugt zwischen dem Kantkopf und dem Drehplättchen noch ein Haftring vorgesehen, der beim Drehen des Verbindungselementes das Drehplättchen mitnimmt.

Noch besser ist jedoch die Anordnung einer Drehfeder zwischen Drehplättchen und Gleitkörper. Diese Drehfeder bewirkt beim Unterdrücken des Retainers ein automatisches Drehen des Drehplättchens, welches nur durch den Anschlag auf der Oberseite des Retainers gestoppt werde kann. In diesem Fall genügt eine einzige Hand, um den Fitting an der Airline - Schiene zu positionieren und festzulegen. Dies ist von besonderem Vorteil für die vorliegende Erfindung.

Das Verbindungselement ist so ausgestaltet, dass es in jeder Lage Retainer und Gleitkörper zusammenhalt. Aus diesem Grunde durchsetzt das Verbindungselement auch mit einem Schaft oder Gewindeabschnitt den Gleitkörper und ist an seinem freien, herausschauenden Ende mit einem Stift versehen, der verhindert, dass das Verbindungselement aus einer Bohrung bzw. Gewindebohrung in dem Gleitkörper herausgleitet. Gleichzeitig dient dieser Stift auch als Endlagenbegrenzung beim Herausschrauben des Verbindungselementes, so dass der Schraubweg in jedem Fall sehr kurz gehalten werden kann.

Wie oben erwähnt, findet die vorliegende Erfindung vor allem beim Festlegen vorn Fittingen an einer Airline - Schiene Anwendung und dies vor allem beim Verstellen von Flugzeugsitzen.

Die vorliegende Erfindung bewirkt weiterhin, dass die Ein- bzw. Umbauzeit von Sitzen im Flugzeug erheblich reduziert wird. Dies bringt eine grosse Kostenersparnis mit sich.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Figur 1: einen Seitenansicht eines erfindungsgemässen Fittings zum Festlegen eines Gegenstandes, beispielsweise eines Flugzeugsitzes an einer nicht näher gezeigten Airline - Schiene;
- Figur 2: eine Stirnansicht des Fittings gemäss Figur 1;
- Figur 3: eine andere Stirnansicht des Fittings gemäss Figur 1;
- Figur 4: eine Draufsicht auf den Fitting gemäss Figur 1 mit um 90° gedrehtem Drehplättchen;
- Figur 5: einen Querschnitt durch den Fitting gemäss Figur 1;
- Figur 6: einen Querschnitt durch den Fitting gemäss Figur 4 entlang Linie VI-VI;
- Figur 7: drei perspektivische Ansichten des Fittings gemäss den Figuren 1 und 4 in verschiedenen Gebrauchslagen;
- Figur 8: eine Seitenansicht eines weiteren Ausführungsbeispiels eines Fittings entsprechend Figur 1;
- Figur 9: einen Querschnitt durch den Fitting gemäss Figur 8 entlang Linie IX - IX;
- Figur 10: eine Seitenansicht eines weiteren Ausführungsbeispiels eines Fittings;
- Figur 11: eine perspektivische Ansicht des Fittings gemäss Figur 10;
- Figur 12: eine Seitenansicht des Fittings entsprechend Figur 10 in einer anderen Gebrauchslage;
- Figur 13: eine perspektivische Ansicht des Fittings gemäss Figur 12;
- Figur 14: eine Seitenansicht eines weiteren Ausführungsbeispiels eines erfindungsgemässen Fittings;
- Figur 15: eine Frontansicht des Fittings gemäss Figur 14;
- Figur 16: eine Draufsicht auf den Fitting gemäss Figur 14;
- Figur 17 und 18: perspektivische Ansichten des Fittings gemäss Figur 14 in Öffnungslage.

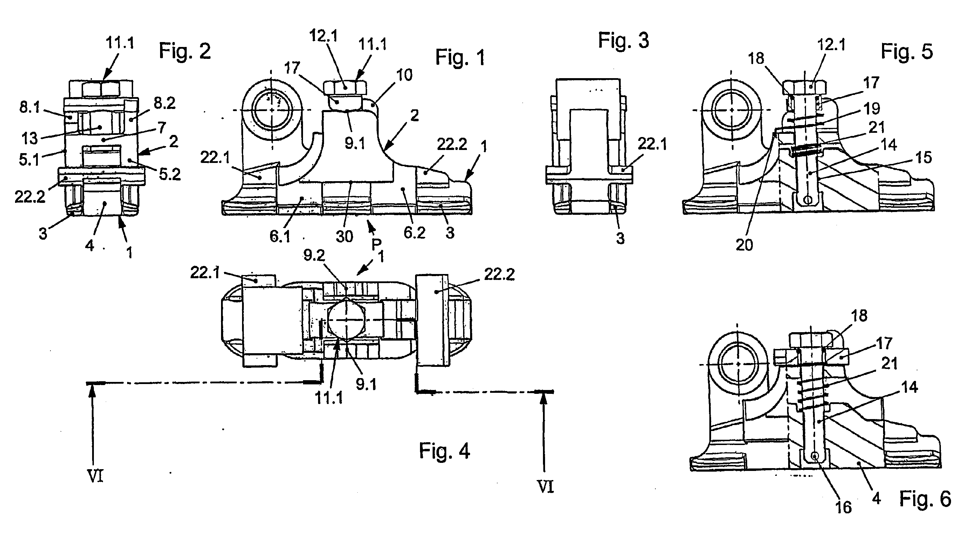

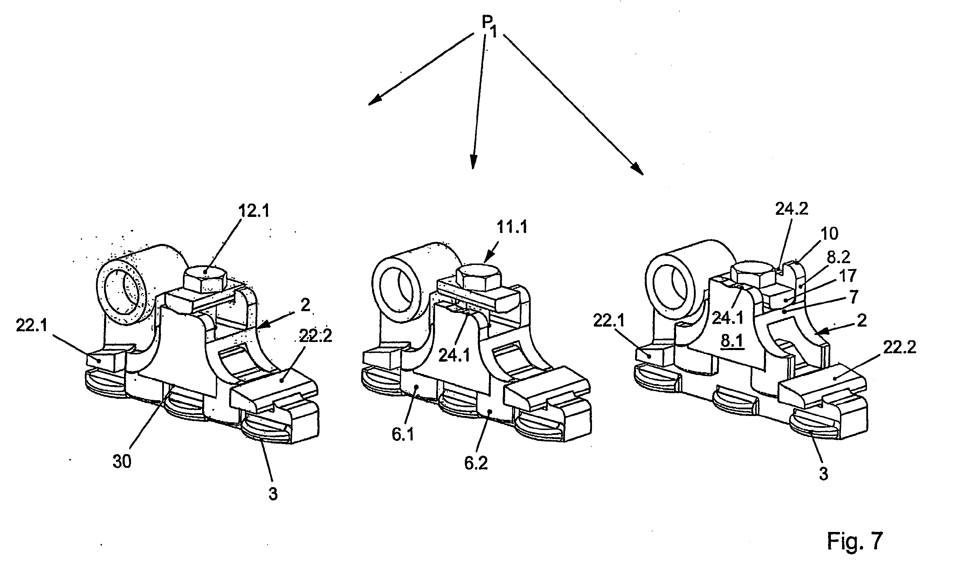

Gemäss Figur 1 weist ein erfindungsgemässer Fitting P₁ einen Gleitkörper 1 auf, auf dem Retainer 2 reiterartig aufsitzt. Der Gleitkörper 1 besitzt seitlich abragende Gleitschuhe 3, wobei in den gezeigten Ausführungsbeispielen jeweils drei Gleitschuhe 3 vorgesehen sind. Mit diesen Gleitschuhen 3 wird der Gleitkörper 1 in einer Nut einer Schiene, insbesondere einer Airline - Schiene, aufgenommen und kann in dieser Nut gleiten. Bevorzugt sind die Gleitschuhe 3 einstückig mit einem Innenkörper 4 des Gleitkörpers 1 verbunden, auf dem, wie oben erwähnt, der Retainer 2 aufsitzt. Dabei übergreift der Retainer 2, wie in Figur 2 gezeigt, den Innenkörper 4 U-förmig mit zwei schenkelartigen Seitenwänden 5.1 und 5.2, die jeweils zwei, in Figur 7 besser erkennbare Hügel 6.1 und 6.2 aufweisen. Die Hügel 6.1 und 6.2 liegen jeweils zwischen zwei Gleitschuhen 3.

Beide Seitenwände 5.1 und 5.2 sind über eine Querwand 7 miteinander verbunden, wobei die Querwand 7 auf der Oberfläche des Innenkörpers 4 aufschlagen kann. Von der Querwand 7 ragen nach oben zwei Seitenstreifen 8.1 und 8.2 auf, in deren Stirnkanten 24.1, 24.2 jeweils eine in Figur 4 erkennbaren Kerbe 9.1 und 9.2 eingeformt sein kann. Ferner ragt von dem Seitenstreifen 8.2, noch ein Anschlag 10 auf.

Die Querwand 7 wird zwischen den beiden Seitenstreifen 8.1 und 8.2 von einem Verbindungselement 11.1 durchsetzt. Dieses besitzt einen Kantkopf 12.1, an den ein Schaft 13 anschliesst, der mit einem in den Figuren 5 und 6 gezeigten Gewindeabschnitt 14 in eine Gewindebohrung 15 in den Gleitkörper 1 eingreift. Der Gewindeabschnitt 14 durchsetzt die Gewindebohrung 15 und ist ausserhalb der Gewindebohrung 15 von einem Stift 16 oder ähnlichem durchquert

Auf dem Schaft 13 sitzt unterhalb des Kantkopfes 12.1 ein Drehplättchen 17 auf, welches sich über einen O-ringförmigen Haftring 1 gegen die Unterseite des Kantkopfes 12.1 abstutzt.

Andererseits ist das Drehpläftchen 17 mit einer Drehfeder 19 verbunden, die mit ihrem freien Ende 20 in der Querwand 7 festliegt.

Des weiteren stützt sich der Retainer 2 über seine Querwand 7 gegen einen Schraubenfeder 21 ab. Die anderenends gegen den Innenkörper 4 anschlägt.

Auf dem Innenkörper 4 sind noch beidseits des Retainers 2 zwei Flügen 22.1 und 22.2 zu erkennen, welche auf der Schiene ausserhalb der Nut entlangglelten. Ferner ragt von dem Innenkörper 4 eine Befestigungshülse 23 auf, in welche ein entsprechender Fortsatz eines Flugzeugsitzes eingesteckt werden kann.

Die Funktionsweise der vorliegende Erfindung wird anhand der Figur 7 näher beschrieben.

Die Ausgangslage des Fittings P₁ ist auf der rechten Darstellung gezeigt. In dieser Ausgangslage ist der Retainer 2 gelöst, d.h., das Drehplättchen 17 ist zwischen den beiden Seitenstreifen 8.1 und 8.2 aufgenommen und liegt der Querwand 7 auf. Die Schraubenfeder 21 ist, wie In Figur 6 dargestellte entspannt. Dagegen ist die Drehfeder 19 zusammengedrückt

Der Fitting P₁ wird nun an eine gewünschte Stelle der Airline - Schiene verschoben, wobei der Fitting P₁ durch die Gleitschuhe 3 und die Flügel 22.1 und 22.2 geführt wird. Ist die gewünschte Stelle erreicht, wird der Retainer 2 gegen den Druck der Schraubenfeder 21 nach unten gedrückt, so dass die Hügel 6.1 und 6.6 in entsprechende, korrespondierende Seitenmulden der Airline - Schiene eingreifen. Damit ist der Retainer an der Schiene festgelegt und kann nicht mehr entlang der Schiene bewegt werden, da die Oberflächen der Hügel 6 mit der Muldeninnenfläche korrespondieren.

Beim Abwärtsbewegen des Retainers 2 wird auch die Drehfeder 19 freigegeben, so dass sie in dem Augenblick eine Drehwirkung auf das Drehplättchen 17 ausüben kann, wenn dieses Drehplättchen 17 die Stirnkanten 24.1 und 24.2 der Seitenstreifen 8.1 und 8.2 überfährt. Das Drehplättchens 17 schlägt bei seiner Drehung an dem Anschlag 10 an und kann nicht weiter gedreht werden.

Wird nun das Verbindungselement 11.1 durch Drehen nach unten bewegt, übt es einen Druck auf das Drehplättchen 17 aus, so dass dieses in die Kerben 9.1 und 9.2 einfährt und der Retainer 2 nach unten gedrückt wird. Gleichzeitig wird der Gleitkörper 1 angezogen, so dass die Randkante der Airline - Schiene zwischen den Gleitschuhen 3 und einer abstehenden Unterkante 30 eingeklemmt wird. Ein Klappern des Fittings P₁ ist nun nicht mehr möglich.

In einem Ausführungsbeispiel kann die Drehfeder 19 auch entfallen, wobei das Drehplättchen 17 durch den Haftring 18 mitgenommen wird. Ein Drehen diese Drehplättchens 17 erfolgt dann mit dem Drehen des Verbindungselementes 11.1, bis das Drehplättchen 17 an den Anschlag 10 anliegt.

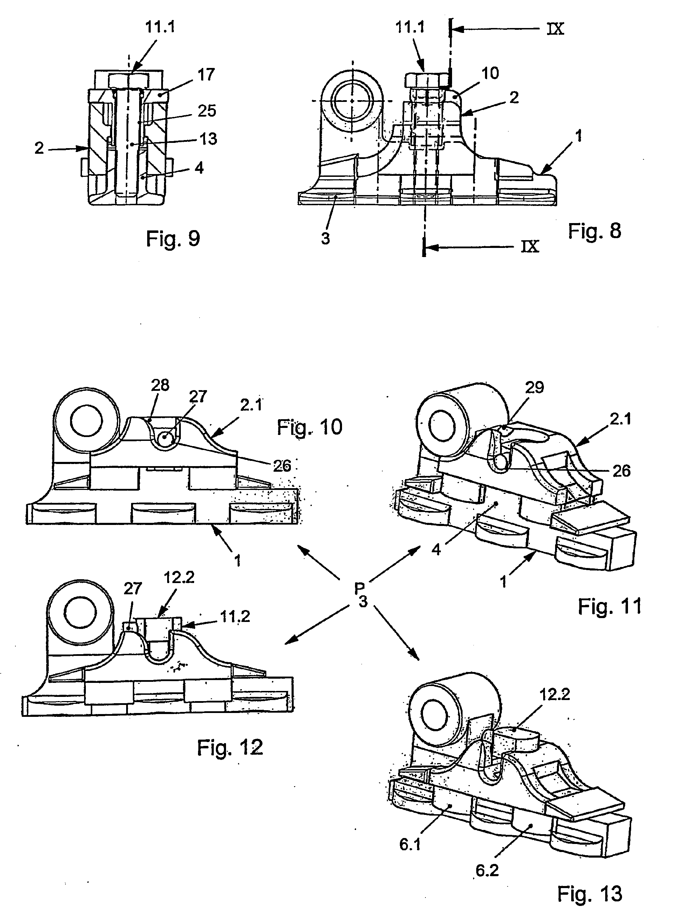

Dies bietet sich vor allem bei dem Ausführungsbeispiel eines Fittings P₂ gemäss den Figuren 8 und 9 an, bei dem zwischen dem Drehplättchen 17 und dem Innenkörper 4 auf den Schaft 13 des Verbindungselementes 11.1 eine Hülse 25 als Positionshalter aufgesetzt ist. Diese Hülse 25 ist in ihrer Länge so ausgelegt, dass sie das Drehplättchen 17 beim Abwärtsbewegen des Retainers 2 in einer Höhe hält, die gewährleistet, dass das Drehplättchen 17 die Stirnkanten 24.1 und 24.2 der Seitenstreifen 8.1 und 8.2 übergreifen kann. Das Drehen des Drehplättchens 17 wird hier vor allem durch den Haftring 18 unterstützt, der beim Drehen des Verbindungselementes 11.1 das Drehplättchen 17 bis zu dem Anschlag 10 mitnimmt.

In den Figuren 10 bis 13 ist ein einfaches Ausführungsbeispiel eines Fittings P₃ gezeigt. Auch hier sitzt ein Retainer 2.1 auf einem Gleitkörper 1 auf und stützt sich über eine nicht näher gezeigte Feder gegen den Innenkörper 4 des Gleitkörpers 1 ab. Allerdings besitzt der Retainer 2.1 eine Mulde 26, die der Aufnahme eines Querriegels 27 dient. Dieser Querriegel 27 ragt von einem Kantkopf 12.2 eines Verbindungselementes 11.2 ab, der in dem Retainer 2.1 aufgenommen werden kann. Eine Seitenwand der Mulde 26 ist als Steigfläche 28 ausgebildet, die den Querriegel zu einer Rastmulde 29 führt.

Zum Festlegen dieses Fittings P₃ wird ebenfalls der Retainer 2.1 nach unten gedrückt, bis der Kantkopf 12.2 aus dem Retainer herausschaut, wie dies in den Figuren 12 und 13 gezeigt ist. Mit einem entsprechenden Schlüssel kann nun der Kantkopf 12.2 um 90° gedreht werden und liegt dann in der Rastmulde 29, so dass der Retainer 2.1 in der abgesenkten Stellung festgelegt ist In dieser abgesenkten Stellung greifen die Hügel 6.1 und 6.2, wie oben näher beschrieben, in die Mulde der Airline - Schiene ein.

Gelöst wird diese Rastlage durch ein entgegensetztes Drehen des Kantkopfes 12. 2, wobei dann der Querriegel 27 wieder in die Mulde 26 einfahren kann und der Retainer 2.1 beim Entspannen der Feder angehoben wird.

Der Stift 16 dient im übrigen dazu, dass das Verbindungselement 11.1 und 11.2 nicht aus seiner Haltelage mit dem Gleitkörper 1 herausgelangen kann. Er dient aber auch dazu, eine Endlage nach oben zu definieren, so dass insbesondere das Verbindungselement 11.1 nicht unbeabsichtigt zu weit herausgeschraubt wird, so dass bei einem weiteren Festlegen des Fittings P₁ ein zu weiter Schraubweg zurückgelegt werden muss.

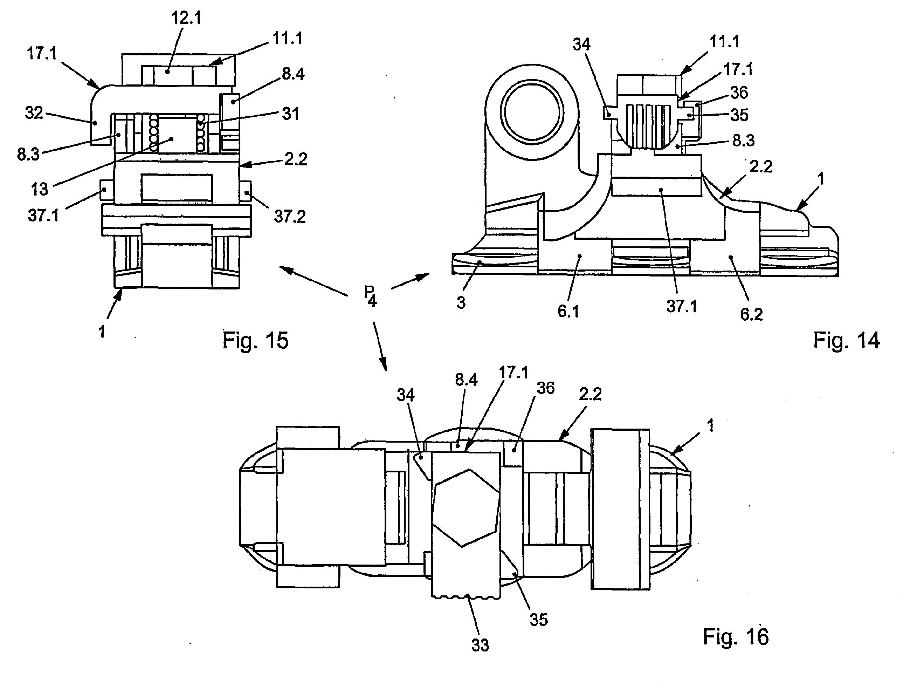

Das Ausführu ngsbeispiel eines weiteren Fittings P₄ gemäss den Figuren 14 bis 18 unterscheidet sich wesentlich dadurch, dass die Schraubenfeder 21 fehlt. Statt dessen ist nur eine Schraubenfeder 31 vorhanden, so dass ein Retainer 2.2 nach unten auf den Gleitkörper 1 aufgedrückt ist.

Die Schraubenfeder 31 umfängt das Verbindungselement 11.1 und stützt sich andererseits des Retainers 2.2 gegen ein Drehplättchen 17.1 ab. Dieses wiederum ist zwischen der Schraubenfeder 31 und dem Kantkopf 12.1 angeordnet und kann um den Schaft 13 gedreht werden. Es besitzt eine abgebogene Grifflasche 32, die mit einer in Figur 16 erkennbaren Riffelung 33 belegt ist. Ferner besitzt sie zwei sich etwa diagonal gegenüberliegende Nasen, wobei eine Nase als Rastnase 34 und die andere als Anschlagnase 35 ausgebildet ist.

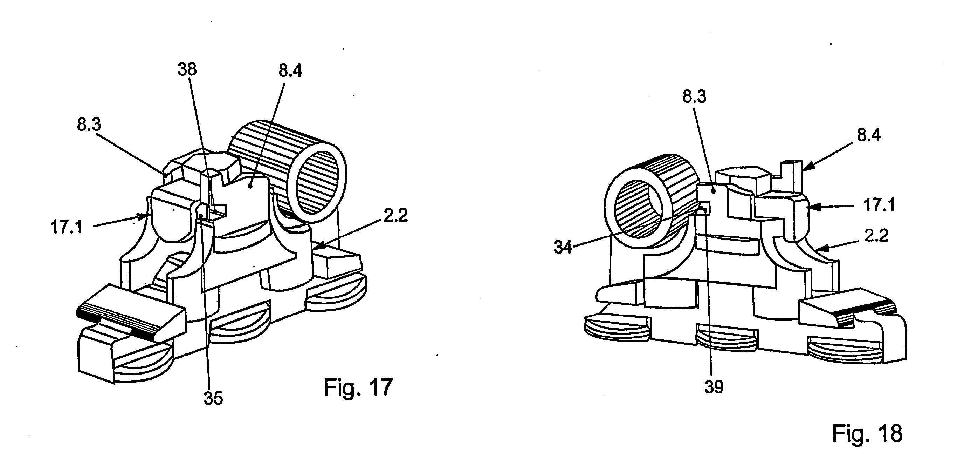

Die Funktionsweise dieses Fittings P₄ wird unter zusätzlicher Bezugnahme auf die Figuren 17 und 18 beschrieben:

Im verriegelten Zustand befindet sich der Fitting P₄ in der in den Figuren 14 bis 16 gezeigten Ausgangslage. Das Drehplättchen 17.1 ist quergestellt, so dass die Grifflasche 32 eine Seitenwand 8.3 des Retainers 2.2 übergreift und das

Drehplättchen 17.1 sowohl auf diese Seitenwand 8.3 als auch auf eine gegenüberliegende Seitenwand 8.4 drückt. Der Retainer 2.2 steht unter dem Druck der Schraubenfeder 31 und unter dem Druck des Drehplättchens 17.1, so dass bei einem Drehen des Verbindungselementes 11.1 der Druck auf den Retainer 2.2 über den Kantkopf 12.1 und das Drehplättchen 17.1 erhöht wird. Die Hügel 6.1 und 6.2 befinden sich in den Mulden einer Airline-Schiene, die Gleitschuhe 3 sitzen in der Airline-Schiene, so dass die Airline-Schiene zwischen den Gleitschuhen 3 und dem Retainer 2.1 eingeklemmt ist. Hierdurch ist der Fitting P₄ absolut festgelegt.

Soll der Fitting P₄ versetzt werden, so wird zuerst das Verbindungselement 11.1 gelöst, so dass das Drehplättchen 17.1 frei drehbar wird. Nunmehr wird das Drehplättchen 17.1 entgegen dem Uhrzeigersinn gedreht, bis die Anschlagnase 35 an einem Anschlag 36 anschlägt. Das Zusammenspiel von Anschlag 36 und Anschlagnase 35 bzw. die Breite des Drehplättchens 17.1 sind so gewählt, dass in dieser Anschlagnase der Retainer 2.2 gegen die Kraft der Schraubenfeder 31 angehoben werden kann, so dass die Seitenwände 8.3 und 8.4 das Drehplättchen 17.1 zwischen sich aufnehmen. Das Anheben des Retainers 2.2 wird durch zwei seitliche Griffleisten 37.1 und 37.2 erleichtert.

Der Retainer 2.2 wird soweit angehoben, bis die Anschlagnase 35 in eine in Figur 17 gezeigte Rastmulde 38 in dem Seitenstreifen 8.4 und gleichzeitig die Rastnase 34 in eine Rastmulde 39 in dem Seitenstreifen 8.3 einfahren können. Auf diese Weise ist nun der Retainer 2.2 in dieser Höhe durch das Drehplättchen 17.1 festgelegt, so dass der Fitting P₄ entlang der Airline-Schiene verschoben werden kann.

Hat der Fitting P₄ die gewünschte Stelle entlang der Airline-Schiene erreicht, genügt ein Drehen des Drehplättchens 17.1 im Uhrzeigersinn, so dass Rastnase und Anschlagnase aus ihren Rastmulden 38 bzw. 39 ausfahren und der Retainer 2.2 unter dem Druck der Schraubenfeder 31 nach unten auf die Airline-Schiene gedrückt wird. Nun kann der Fitting P₄ entlang der Airline-Schiene soweit geschoben werden, bis die Hügel 6.1 und 6.2 korrespondierende Ausformungen in der Airline-Schiene erreicht haben, wobei die Hügel 6.1 und 6.2 dann automatisch unter den Druck der Schraubenfeder 31 in diese Ausnehmungen eingleiten.

Jetzt ist es möglich, das Drehplättchen 17.1 wieder im Uhrzeigersinn um ca. 90° zu schwenken, so dass das Drehplättchen 17.1 die beiden Seitenstreifen 8.3 und 8.4 übergreift. Das Verbindungselement 11.1 kann jetzt wieder angezogen werden. Damit erfolgt eine Verriegelung des Fittings P₄ an dieser Stelle.

### Bezugszeichenliste

| | | | | | |
|---|---|---|---|---|---|
| 1 | Gleitkörper | 34 | Rastnase | 67 | |
| 2 | Retainer | 35 | Anschlagnase | 68 | |
| 3 | Gleitschuh | 36 | Anschlag | 69 | |
| 4 | Innenkörper | 37 | Griffleisten | 70 | |
| 5 | Seitenwand | 38 | Rastmulde | 71 | |
| 6 | Hügel | 39 | Rastmulde | 72 | |
| 7 | Querwand | 40 | | 73 | |
| 8 | Seitenstreifen | 41 | | 74 | |
| 9 | Kerbe | 42 | | 75 | |
| 10 | Anschlag | 43 | | 76 | |
| 11 | Verbindungselement | 44 | | 77 | |
| 12 | Kantkopf | 45 | | 78 | |
| 13 | Schaft | 46 | | 79 | |
| 14 | Gewindeabschnitt | 47 | | | |
| 15 | Gewindebohrung | 48 | | | |
| 16 | Stift | 49 | | | |
| 17 | Drehplättchen | 50 | | | |
| 18 | Haftring | 51 | | | |
| 19 | Drehfeder | 52 | | | |
| 20 | Freies Ende | 53 | | | |
| 21 | Schraubenfeder | 54 | | | |
| 22 | Flügel | 55 | | | |
| 23 | Befestigungshülse | 56 | | | |
| 24 | Stirnkante | 57 | | | |
| 25 | Hülse | 58 | | | |
| 26 | Mulde | 59 | | | |
| 27 | Querriegel | 60 | | P | Fitting |
| 28 | Steigfläche | 61 | | | |
| 29 | Rastmulde | 62 | | | |
| 30 | Unterkante | 63 | | | |
| 31 | Schraubenfeder | 64 | | | |
| 32 | Grifflasche | 65 | | | |
| 33 | Riffelung | 66 | | | |

## Patentansprüche

1. Vorrichtung zum Festlegen eines Gegenstandes an einer Schiene mittels eines Fittings (P₁, P₂, P₃, P₄), der mit einem Gleitkörper (1) entlang der Schiene in einer Nut bewegbar ist und einen Retainer (2, 2.1, 2.2) aufweist, der in zumindest eine seitliche Nutmulde in der Schiene absenkbar ist, wobei der Retainer (2, 2.1, 2.2) über ein Verbindungselement (11.1, 11.2) mit dem Gleitkörper (1) verbunden ist und sich gegenüber dem Gleitkörper (1) und/oder gegenüber einem Drehelement (17,17.1, 27) über zumindest einen Kraftspeicher (19, 21, 31) abstützt und den unter Druck stehenden Retainer (2, 2.1, 2.2) in zumindest zwei Höhenlagen gegenüber der Schiene festhält,
**dadurch gekennzeichnet,**
**dass** dem Drehelement (17, 17.1, 27) auf dem Retainer (2, 2.1, 2.2) ein Anschlag (10, 36) und/oder zumindest eine Rastkerbe (9.1, 9.2) oder Rastmulde (29, 38, 39) zugeordnet ist

2. Vorrichtung nach Anspruch 1, **dadurch gekennzeichnet, dass** die Schiene eine Airline - Schiene ist.

3. Vorrichtung nach Anspruch 1 oder 2, **dadurch gekennzeichnet, dass** der Kraftspeicher eine Schraubenfeder (19, 21, 31) ist

4. Vorrichtung nach Anspruch 3, **dadurch gekennzeichnet, dass** die Schraubenfeder (19,31) das Verbindungselement (11.1, 11.2) umfängt.

5. Vorrichtung nach wenigstens einem der Ansprüche 1 bis 4, **dadurch gekennzeichnet, dass** das Verbindungselement (11.1, 11.2) einen Kantkopf (12.1, 12.2) aufweist.

6. Vorrichtung nach wenigstens einem der Ansprüche 1 bis 5, **dadurch gekennzeichnet, dass** von dem Verbindungselement (11.2) ein Querriegel (27) abragt, der in eine Mulde (26) in dem Retainer (2.1) eingreift.

7. Vorrichtung nach Anspruch 6, **dadurch gekennzeichnet, dass** die Mulde (26) eine Steigfläche (28) zum Aufgleiten des Querriegel (27) aufweist

8. Vorrichtung nach Anspruch 7, **dadurch gekennzeichnet, dass** die Steigfläche (28) zu der Rastmulde (29) hinführt, die etwa um 90° gedreht zu der Mulde (26) verläuft.

9. Vorrichtung nach wenigstens einem der Ansprüche 1 bis 5, **dadurch gekennzeichnet, dass** an dem Verbindungselement (11.1) ein Drehplättchen (17,17.1) angeordnet ist

10. Vorrichtung nach Anspruch 9, **dadurch gekennzeichnet, dass** an dem Drehplättchen (17.1) zwei sich gegenüberliegende Rast- bzw. Anschlagnasen (34, 35) vorgesehen sind, denen die Rastmulden (38, 39) in Seitenstreifen (8.3, 8.4) des Retainers (2.2) zugeordnet sind.

11. Vorrichtung nach Anspruch 9 oder 10, **dadurch gekennzeichnet, dass** das Drehplättchen (17.1) mit einer Grifflasche (32) versehen ist.

12. Vorrichtung nach einem der Ansprüche 9 bis 11, **dadurch gekennzeichnet, dass** zwischen Drehplättchen (17) und Kantkopf (12.1) ein Haftrlng (18) vorgesehen ist.

13. Vorrichtung nach einem der Ansprüche 9 bis 12, **dadurch gekennzeichnet, dass** unter dem Drehplättchen (17) eine Drehfeder (19) angeordnet ist, die einends das Drehplättchen angreift und andemends mit dem Gleltkörper (1) verbunden, ist.

14. Vorrichtung nach einem der Ansprüche 9 bis 13, **dadurch gekennzeichnet, dass** unter dem Drehplättchen (17) eine Hülse (25) angeordnet ist, die sich andererseits gegen den Gleitkörper (1) abstützt.

15. Vorrichtung nach wenigstens einem der Ansprüche 1 bis 14, **dadurch gekennzeichnet**, das Verbindungselement (11.1) einen Gewindeabschnitt (14) aufweist, mit dem es in eine Gewindebohrung (15) In dem Gleitkörper (1) eingreift

16. Vorrichtung nach Anspruch 15, **dadurch gekennzeichnet, dass** der Gewindeabschnitt (14) die Gewindebohrung (15) durchgreift und nach der Gewindebohrung (15) von einem Stift (16) durchsetzbar ist.

## Claims

1. A device for fixing an object to a rail by means of a fitting (P₁, P₂, P₃, P₄) which is movable along the rail in a groove with a sliding body (1) and comprises a retainer (2, 2.1, 2.2) which can be lowered into at least one lateral groove depression in the rail, with the retainer (2, 2.1, 2.2) being connected by means of a connecting element (11.1, 11.2) to the sliding body (1), wherein the retainer (2, 2.1, 2.2) is supported relative to the sliding body (1) and/or relative to a rotary element (17, 17.1, 27) by means of at least one force store (19, 21, 31) and holds the pressurized retainer (2, 2.1, 2.2) fixedly in at least two height positions relative to the rail,
**characterized in,**
**that** a stop (10, 36) and/or at least one latching notch (9.1, 9.2) or latching depression (29, 38, 39) is assigned to the rotary element (17, 17.1, 27) on the retainer (2, 2.1, 2.2).

2. The device according to claim 1, **characterized in that** the rail is an airline rail.

3. The device according to claim 1 or 2, **characterized in that** the force store is a coil spring (19, 21, 31).

4. The device according to claim 3, **characterized in that** the coil spring (19, 31) surrounds the connecting element (11.1, 11.2).

5. The device according to at least one of the claims 1 to 4, **characterized in that** the connecting element (11.1, 11.2) comprises a polygonal head (12.1, 12.2).

6. The device according to at least one of the claims 1 to 5, **characterized in that** a transverse bar (27) projects from the connecting element (11.2), which transverse bar (27) engages into a depression (26) in the retainer (2.1).

7. The device according to claim 6, **characterized in that** the depression (26) comprises a rising face (28) for the transverse bar (27) to slide on.

8. The device according to claim 7, **characterized in that** the rising face (28) leads to the latching depression (29) which runs rotated approximately 90° relative to the depression (26).

9. The device according to one of the claims 1 to 5, **characterized in that** a rotary plate (17, 17.1) is arranged on the connecting element (11.1).

10. The device according to claim 9, **characterized in that** two opposite latching or rather stop lugs (34, 35) are provided on the rotary plate (17.1), to which latching or rather stop lugs (34, 35) are assigned the latching depressions (38, 39) in side strips (8.3, 8.4) of the retainer (2.2).

11. The device according to claim 9 or 10, **characterized in that** the rotary plate (17.1) is provided with a grip lug (32).

12. The device according to claims 9 to 11, **characterized in that** an adhesive ring (18) is provided between rotary plate (17) and the polygonal head (12.1).

13. The device according to at least one of the claims 9 to 12, **characterized in that** a rotary spring (19) is arranged below the rotary plate (17), which rotary spring (19) engages at one end on the rotary plate and is connected at the other end to the sliding body (1).

14. The devices according to at least one of the claims 9 to 13, **characterized in that** a sleeve (25) is arranged below the rotary plate (17), which sleeve (25) is supported at the other side against the sliding body (1).

15. The device according to at least one of the claims 1 to 14, **characterized in that** the connecting element (11.1) comprises a threaded portion (14) by means of which said connecting element (11.1) engages into a threaded bore (15) in the sliding body (1).

16. The device according to claim 15, **characterized in that** the threaded portion (14) engages through the threaded bore (15) and, beyond the threaded bore (15), can be penetrated by a pin (16).

## Revendications

1. Dispositif de fixation d'un objet sur un rail au moyen d'un raccord (P₁, P₂, P₃, P₄) qui est déplaçable avec un corps coulissant (1) le long du rail dans une rainure et qui présente un dispositif de retenue (2, 2.1, 2.2) qui peut être descendu dans au moins une cavité de rainure latérale dans le rail, le dispositif de retenue (2, 2.1, 2.2) étant relié au corps coulissant (1) par l'intermédiaire d'un élément de connexion (11.1, 11.2) et s'appuyant par rapport au corps coulissant (1) et/ou par rapport à un élément rotatif (17, 17.1, 27) par l'intermédiaire d'au moins un accumulateur de force (19, 21, 31) et maintenant le dispositif de retenue (2, 2.1, 2.2) sous pression dans au moins deux positions en hauteur par rapport au rail,
**caractérisé par le fait**
**qu'**à l'élément rotatif (17, 17.1, 27) sur le dispositif de retenue (2, 2.1, 2.2) est associée une butée (10, 36) et/ou au moins une encoche d'encliquetage (9.1, 9.2) ou une cavité de rainure (29, 38, 39).

2. Dispositif selon la revendication 1, **caractérisé par le fait que** le rail est un rail aérien.

3. Dispositif selon la revendication 1 ou 2, **caractérisé par le fait que** l'accumulateur de force est un ressort à boudin (19, 21, 31).

4. Dispositif selon la revendication 3, **caractérisé par le fait que** le ressort à boudin (19, 31) entoure l'élément de connexion (11.1, 11.2).

5. Dispositif selon au moins l'une des revendications 1 à 4, **caractérisé par le fait que** l'élément de connexion (11.1, 11.2) présente une tête à dents (12.1, 12.2).

6. Dispositif selon au moins l'une des revendications 1 à 5, **caractérisé par le fait que** de l'élément de connexion (11.2) ressort un verrou transversal (27) qui s'engage dans une cavité (26) dans le dispositif de retenue (2.1).

7. Dispositif selon la revendication 6, **caractérisé par le fait que** la cavité (26) présente une face montante (28) destinée au glissement vers le haut du verrou transversal (27).

8. Dispositif selon la revendication 7, **caractérisé par le fait que** la face montante (28) conduit à la cavité d'encliquetage (29) qui s'étend tournée d'environ 90° par rapport à la cavité (26).

9. Dispositif selon au moins l'une des revendications 1 à 5, **caractérisé par le fait que** sur l'élément de connexion (11.1) est disposée une plaquette rotative (17, 17.1).

10. Dispositif selon la revendication 9, **caractérisé par le fait que** sur la plaquette rotative (17.1) sont prévus deux nez d'encliquetage ou de butée opposés (34, 35) auxquels sont associées les cavités d'encliquetage (38, 39) dans des bandes latérales (8.3, 8.4) du dispositif de retenue (2.2).

11. Dispositif selon la revendication 9 ou 10, **caractérisé par le fait que** la plaquette rotative (17.1) est munie d'une languette de préhension (32).

12. Dispositif selon l'une des revendications 9 à 11, **caractérisé par le fait qu'**entre la plaquette rotative (17) et la tête à dents (12.1) est prévue une bague d'adhérence (18).

13. Dispositif selon l'une des revendications 9 à 12, **caractérisé par le fait que** sous la plaquette rotative (17) est disposé un ressort rotatif (19) qui, à une extrémité, vient en prise avec la plaquette rotative et, à l'autre extrémité, est relié au corps coulissant (1).

14. Dispositif selon l'une des revendications 9 à 13, **caractérisé par le fait que** sous la plaquette rotative (17) est disposé un manchon (25) qui s'appuie, d'autre part, sur le corps coulissant (1).

15. Dispositif selon au moins l'une des revendications 1 à 14, **caractérisé par le fait que** l'élément de connexion (11.1) présente un segment fileté (14) par lequel il pénètre dans un alésage taraudé (15) dans le corps coulissant (1).

16. Dispositif selon la revendication 15, **caractérisé par le fait que** le segment fileté (14) traverse l'alésage taraudé (15) et peut être traversé, après l'alésage taraudé (15), par une goupille (16).
